# EUROPÄISCHE PATENTSCHRIFT

(11) **EP 3 770 766 B1**
(45) Veröffentlichungstag und Bekanntmachung des Hinweises auf die Patenterteilung: **25.03.2026**
(21) Anmeldenummer: 20182193.1
(22) Anmeldetag: 25.06.2020
(51) Int. Cl.: G06F 11/3604, G06F 11/3668

(54) **VERFAHREN ZUM TESTEN EINES SYSTEMS**
METHOD FOR TESTING A SYSTEM
PROCÉDÉ D'ESSAI D'UN SYSTÈME

(30) Priorität: 25.07.2019 DE 102019211037
(43) Veröffentlichungstag der Anmeldung: 27.01.2021
(73) Patentinhaber: Robert Bosch GmbH, 70442 Stuttgart (DE)
(72) Erfinder: Loehr, Hans, 90409 Nürnberg (DE); Amarnath, Rakshith, 71282 Hemmingen (DE); Huth, Christopher, 71229 Leonberg (DE); Greiner, Simon, 71229 Leonberg (DE)

(56) Entgegenhaltungen:
- WO-A1-2014/180107
- US-A1- 2009 259 989
- US-A1- 2012 222 013
- US-A1- 2015 317 234
- US-A1- 2019 205 543

## Beschreibung

Die Erfindung betrifft computerimplementierte Verfahren zum Testen eines Systems, insbesondere eines Computerprogramms, eines Hardwaresystems oder eines eingebetteten Systems, sowie hierzu eingerichtete Computerprogramme und Testsysteme.

### Stand der Technik

Eine bekannte Methode zum dynamischen Testen von Systemen auf Schwachstellen ist das sogenannte Fuzz Testing (auch: Fuzzy Testing oder Fuzzing). Bei diesem Ansatz wird ein getestetes System (SUT - system under test) ausgeführt, typischerweise ein Computerprogramm oder ein Teil eines Computerprogramms. Die Ausführung erfolgt abhängig von Eingangsgrößen, welche das System von einem Fuzzer erhält. Während das System ausgeführt wird, also insbesondere die Software ausgeführt wird, d.h. von einem Rechner abgearbeitet wird, beobachtet der Fuzzer das Verhalten des getesteten Systems. Dabei kennzeichnet er zur Verfügung gestellte Eingangsgrößen als fehlerrelevant, wenn das getestete System bei der Ausführung abbricht oder anderes unerwünschtes Verhalten zeigt.

Bekannte, verfügbare Fuzzer sind beispielsweise Libfuzz, AFL-fuzz oder Hongfuzz.

Dynamische Ansätze für Softwaretests wie Fuzzing neigen allerdings zu oberflächlichen Analysen, da oft tiefe Pfade durch das getestete Computerprogramm nicht gefunden werden. Zudem hängt die Effizienz von Fuzzing von der Ausführungsgeschwindigkeit des getesteten Systems ab. Je mehr Ausführungen für ein getestetes System möglich sind, desto mehr Eingangsgrößen können daraufhin überprüft werden, ob für sie ein fehlerhaftes Systemverhalten auftritt.

Als weitere Ansätze zum Testen von Computerprogrammen auf Schwachstellen sind statische Methoden bekannt, z.B. symbolische Ausführung (symbolic execution), konkolische Ausführung oder auch konkret-symbolische Ausführung (concolic execution), abstrakte Interpretation (abstract interpretation), Modellprüfung (model checking) oder begrenzte Modellprüfung. Bei diesen Ansätzen werden der Quellcode oder ein Zwischencode (intermediate representation) mittels mathematisch formaler Methoden analysiert. Diese Techniken ermöglichen es, Garantien zu geben, welche Art von Fehlern in einer Software enthalten sind.

Einen Überblick über symbolische und konkolische Ausführung und Methoden der abstrakten Interpretation bietet: Baldoni, Roberto, et al. "A survey of symbolic execution techniques." ACM Computing Surveys (CSUR) 51.3 (2018): 50.

Statische Analyseansätze für Software hängen vom oft unentscheidbaren Problem ab, ob bzw. inwieweit ein bestimmtes Computerprogramm formal verifiziert werden kann. Um automatische, computerimplementierte Analysewerkzeuge bereitstellen zu können, muss in der Regel eine Überannäherung erfolgen. Daher ergeben statische Analysen oft viele falsch-positive Ergebnisse. Z.B. melden sie einerseits Probleme im getesteten System, welche in einer tatsächlichen Durchführung des getesteten Systems nicht herbeigeführt werden können, oder sie melden Eingangsgrößen, welche zum Durchlaufen eines bestimmten Programmpfades führen sollten, welche bei einer tatsächlichen Ausführung des Computerprogramms aber in einem Durchlaufen eines anderen Programmpfades resultieren. Die Präzision und Ausführungsdauer statischer Analysen können neben anderen Kriterien stark von der Größe des analysierten Programms abhängen.

Aus der WO 2014/180107 A1 ist eine testbasierte statische Analyse bekannt. Die US 2009/2599989 A1 offenbart eine mehrschichtige statische Programmanalyse-Umgebung für Softwaretests. Ein Verfahren zur Erstellung eines Schwächenberichts für Java-Projekte ist in der US 2019/0205543 A1 beschrieben. Ein Computerprogramm zur automatischen Bewertung von Nutzerschnittstellen in Softwareprogrammen wird in der US 2015/317234 A1 vorgestellt. Die US 2012/222013 A1 beschreibt eine Modellierung eines Softwareverhaltens.

Vorgestellt wird ein computerimplementiertes Verfahren zum Testen eines Systems, wobei das getestete System insbesondere ein Computerprogramm, ein Hardwaresystem oder ein eingebettetes System umfasst oder ist.

Dabei wird mit einer statischen Analyse ein erster Teil einer Ausführungs-struktur für das System daraufhin untersucht, ob das System bei einer Ausführung von dem ersten Teil der Ausführungsstruktur entsprechenden Ausführungspfaden ohne Fehler abläuft.

Die statische Analyse umfasst dabei eine computerimplementierte Untersuchung des Systems ohne tatsächliche Ausführung des Systems, vorzugsweise anhand einer Ausführungsstruktur und mittels einer formalen mathematischen Methode. Eingesetzt werden können für die statische Analyse vorzugsweise eine Modellprüfung, eine begrenzte Modellprüfung, eine Untersuchung mittels Theorembeweiser, eine Typisierung, eine abstrakte Interpretation, eine symbolische Ausführung oder eine konkolische Ausführung.

Wird für den ersten Teil der Ausführungsstruktur in der statischen Analyse eine Ausführung ohne Fehler festgestellt, erfolgt eine Untersuchung des Systems mit einer dynamischen Analyse, welche dem ersten Teil der Ausführungsstruktur entsprechende Ausführungspfade ausspart bzw. gezielt nicht ausführt.

Mit der dynamischen Analyse wird vorzugsweise untersucht, ob das System für mindestens eine bestimmte Eingangsgröße fehlerfrei ausgeführt wird. Sie umfasst dabei eine computerimplementierte Untersuchung des Systems während einer tatsächlichen Ausführung des Systems. Vorzugsweise umfasst die dynamische Analyse ein Fuzzing, insbesondere erfolgt die dynamische Analyse für mindestens eine von einem Fuzzer erzeugte Eingangsgröße.

Somit wird ein Testverfahren vorgestellt, welches durch die Kombination mit statischer Analyse ein besonders effizientes dynamisches Testen eines Systems ermöglicht. Insbesondere kann die Ausführungszeit der dynamischen Analyse mit fortschreitender oder wiederholter statischer Analyse schrittweise reduziert werden, in dem die Zahl der in der dynamischen Analyse zu testenden Ausführungspfade durch die statische Analyse nach und nach verringert wird.

Zusätzlich wird in der statischen Analyse nur ein Teil der Ausführungsstruktur betrachtet, was diese Untersuchung ebenfalls sehr effizient gestaltet und die mögliche Genauigkeit der verwendeten statischen Untersuchungstechniken erhöht.

In einer besonders bevorzugten Ausgestaltung wird in einer weiteren statischen Analyse der erste Teil der Ausführungsstruktur ausgespart, wenn für den ersten Teil der Ausführungsstruktur in der statischen Analyse eine Ausführung ohne Fehler festgestellt wird. Die weitere statische Analyse der Ausführungsstruktur findet somit statt, nachdem die statische Analyse für deren ersten Teil abgeschlossen ist. Damit wird sichergestellt, dass auch die statische Analyse effizient abläuft und ein bei wiederholter Ausführung der statischen Analyse immer kleiner werdender Teil der Ausführungsstruktur noch untersucht werden muss.

In einer weiteren bevorzugten Ausgestaltung wird für den ersten Teil der Ausführungsstruktur abhängig von der statischen Analyse eine erste Eingangsgröße berechnet und die erste Eingangsgröße in einem Satz für eine dynamische Analyse zu berücksichtigender Eingangsgrößen gespeichert, wenn für den ersten Teil der Ausführungsstruktur in der statischen Analyse eine Ausführung mit Fehler festgestellt wird. Insbesondere wird dabei als die erste Eingangsgröße eine Eingangsgröße berechnet, für die die statische Analyse ergibt, dass die Ausführung mit Fehler auftritt.

Hierdurch können in der statischen Analyse als fehlerbehaftet identifizierte Teilstrukturen noch einmal gezielt in der dynamischen Analyse beleuchtet werden. Liefert eine statische Analyse z.B. falsch-positive Fehler, kann dies in der dynamischen Analyse herausgefunden werden. Entsprechend können auch tatsächlich vorhandene Fehler verifiziert werden. Somit wird ein vorteilhaftes gesamtes Testverfahren bereitgestellt.

In einer bevorzugten Ausgestaltung werden Schritte der statischen Analyse und Schritt der dynamischen Analyse parallel ausgeführt. Hierdurch können die Vorteile der Verfahren besonders schnell und effizient realisiert werden. Stehen dagegen beispielsweise keine ausreichenden parallelen Rechenkapazitäten zur Verfügung, können die Vorteile in einer alternativen Ausgestaltung auch realisiert werden, indem die Untersuchung der statischen Analyse und die Untersuchung der dynamischen Analyse nacheinander bzw. sequentiell ausgeführt werden. Insbesondere ist in beiden Varianten eine wiederholte Ausführung von dynamischen Analysen und statischen Analysen in Schleifen möglich.

In bevorzugten Ausgestaltungen der beschriebenen Verfahren umfasst das getestete System ein Computerprogramm, die Ausführungsstruktur ist eine Baumstruktur, welche Ausführungspfade des Computerprogramms darstellt, und die dynamische Analyse umfasst eine Ausführung eines Programmcodes des Computerprogramms auf einem Rechner. Für Systeme, die durch Computerprogramme realisiert sind oder Computerprogramme enthalten, ist das beschriebene Verfahren für automatisierte Systemtests besonders effizient realisierbar.

In einer weitere bevorzugten Ausgestaltung wird die Untersuchung des ersten Teils der Ausführungsstruktur für das System in der statische Analyse mit zwei unterschiedlichen Analysemethoden durchgeführt, wobei die erste Analysemethode den ersten Teil der Ausführungsstruktur von einer Wurzel der Ausführungsstruktur Richtung einem Blatt der Ausführungsstruktur und die zweite Analysemethode den ersten Teil der Ausführungsstruktur von dem Blatt der Ausführungsstruktur Richtung der Wurzel der Ausführungsstruktur untersucht. Die beiden Analysemethoden werden dabei vorzugsweise gleichzeitig in der statischen Analyse eines Teilbaums der Ausführungsstruktur eingesetzt. Damit kann die Größe des von jeder Analysemethode zu untersuchenden Teils der Struktur reduziert werden, wodurch die statische Analyse schneller und mit höherer Präzision durchgeführt werden kann.

In bevorzugten Ausgestaltungen umfassen die Fehler, auf welche das System in der statischen und / oder dynamischen Analyse untersucht wird, mindestens eine Laufzeitausnahme, eine verletzte Assertion, ein Einnehmen eines nicht zulässigen Systemzustands, einen Systemabbruch, einen fehlerhaften Speicherzugriff, einen fehlerhaften Ressourcenzugriff oder ein Hängenbleiben insbesondere ein nicht Weiterrechnen eines Computerprogramms. Durch Überprüfung auf diese möglichen kritischen Systemfehler kann die Sicherheit und reibungslose Funktionsweise des Systems festgestellt werden. Auch kann in einer besonders bevorzugten Ausgestaltung insbesondere abhängig von den Ergebnissen der dynamischen Analyse eine automatisierte Behebung festgestellter Fehler, insbesondere auch für die beschriebenen Fehlertypen. Hiermit wird nicht nur eine recheneffiziente Untersuchungsmethode Ausführungsfehler eines Systems bereitgestellt, sondern gleich auch ein in seiner Ausführung verbessertes System.

Nachfolgend werden Ausführungsformen der Erfindung unter Bezugnahme auf die beiliegenden Zeichnungen näher erläutert. In den Zeichnungen zeigen:
Fig. 1 schematisch einen Ausführungszweig eines Computerprogramms,
Fig. 2 schematisch einen beispielhaften Ablauf eines Verfahrens zum Testen eines Computerprogramms.

### Beschreibung der Ausführungsbeispiele

Im Folgenden wird die Erfindung vorrangig für den Fall beschrieben, dass das zu testende System ein Computerprogramm ist oder ein Computerprogramm beinhaltet. Dabei kann es sich bei dem zu testenden System um ein reines Computerprogramm handeln oder um ein eingebettetes System mit Computerprogramm. Die beschriebenen Verfahren sind entsprechend aber auch für reine Hardwaresysteme als zu testendes System geeignet.

Automatisierte dynamische Tests können an einem getesteten System (system under test) von einem computerimplementierten Testsystem durchgeführt werden. Dabei erzeugt das Testsystem Eingangsgrößen für das getestete System, führt das getestete System aus bzw. initiiert dessen Ausführung und beobachtet das getestete System, um fehlerhaftes Verhalten festzustellen. Das getestete System empfängt die Eingangsgrößen und führt abhängig von diesen eine Berechnung durch. Bei einem Test eines Computerprogramms wird dieses insbesondere ausgeführt, indem ein Prozessor das Computerprogramm abarbeitet.

Dynamische Tests von Computerprogrammen können ein Protokoll über Eingangsgrößen erstellen, welche eine fehlerhafte Ausführung des Computerprogramms bewirken (Fehlerset oder Errorset). Auch können sie ein (z.B. partielles) Protokoll führen über bereits durchgeführte Testfälle, insbesondere über die entsprechenden Eingangsgrößen dieser Tests (Eingangsgrößenset oder Inputset). Weiterhin können sie ein Protokoll über Eingangsgrößen führen, welche interessant für das Testsystem sind, um weitere zusätzliche Eingangsgrößen für Tests an dem getesteten System zu berechnen.

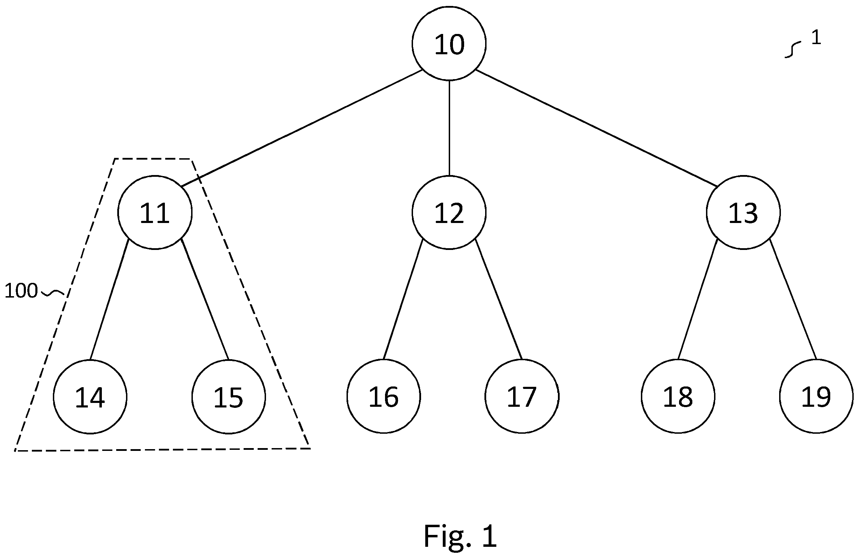

Figur 1 zeigt schematisch eine beispielhafte Ausführungsbaumstruktur bzw. einen Baum 1 eines Computerprogramms, welche verschiedene Ausführungspfade des Computerprogramms darstellt. Die gezeigte Baumstruktur 1 weist Knoten 10 bis 19 auf sowie Kanten, welche die Knoten entlang der Ausführungspfade verbinden. Dabei ist der Knoten 10 ein Wurzelknoten, die Knoten 11, 12 und 13 innerer Knoten und die Knoten 14 bis 19 Blattknoten. Gezeigt ist auch ein Teilbaum 100, welcher den inneren Knoten 11 sowie die Blattknoten oder Blätter 14 und 15 umfasst. Jeder Pfad in der Ausführungsbaumstruktur von dem Wurzelknoten 10 zu einem der Blattknoten 14 bis 19 entspricht einem Ausführungspfad des ausgeführten Computerprogramms. Ein beispielhafter Ausführungspfad kann durch die aufeinander folgenden Knoten 10, 11, 15 gegeben sein.

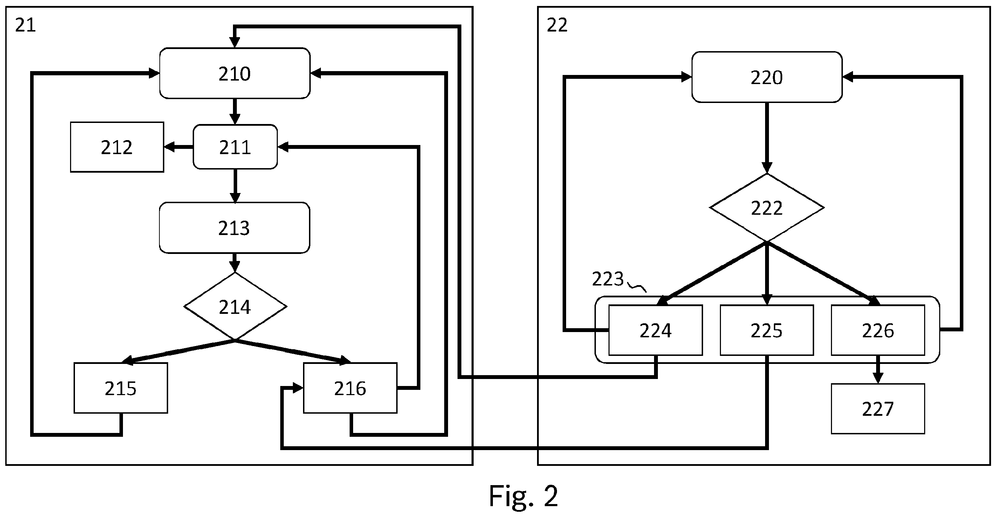

Fig. 2 zeigt schematisch einen beispielhaften Ablauf eines Verfahrens zum Testen eines Computerprogramms. Dabei weist das Verfahren Schritte einer dynamischen Analyse auf, die in Block 21 gezeigt sind, sowie Schritte einer statischen Analyse, welche in Block 22 gezeigt sind.

In einem Schritt 220 der statischen Analyse wird auf Basis einer Ausführungsbaumstruktur eines Computerprogramms ein Teilbaum der Baumstruktur identifiziert bzw. ausgewählt. Die Ausführungsbaumstruktur kann als Eingangsgröße erhalten werden oder abhängig von einer Eingangsgröße, z.B. eines Quellcodes oder einer Binärdatei erstellt werden. Für den Fall eines zu testenden Hardwaresystems kann eine Ausführungsbaumstruktur auch abhängig von einem Hardwarelayout erstellt werden.

Die Baumstruktur kann dabei für das zu testende System bzw. Computerprogramm mit verfügbaren Technologien erstellt werden, beispielsweise mit symbolischer Ausführung, Software-Theorembeweisern oder einer Kombination dieser Verfahren.

In einem folgenden Schritt 222 wird für den identifizierten bzw. ausgewählten Teilbaum in einer computerimplementierten statischen Analyse untersucht, ob ein Fehler bei der Ausführung eines in diesem Teilbaum enthaltenen bzw. dargestellten Ausführungspfads des Computerprogramms auftreten kann. Die Analyse kann vorzugsweise drei verschiedene Ergebnisse liefern: "kein Fehler kann auftreten", "ein Fehler kann auftreten", "unbekannt", wobei "unbekannt" das Ergebnis für den Fall ist, dass das Testsystem aufgrund der Analyse nicht entscheiden kann, ob ein Fehler auftreten kann oder nicht.

Das Ergebnis dieser Analyse auf Fehlerfreiheit kann mit verfügbaren Technologien durchgeführt werden, insbesondere Modellprüfung, begrenzte Modellprüfung, Theorembeweisern, Typisierung, abstrakte Interpretation, symbolische Ausführung, konkolische Ausführung oder Kombinationen hieraus.

Das Verfahren führt nach Schritt 222 in einen Block 223, in welchem Schritte abhängig von dem Ergebnis in Schritt 222 durchgeführt werden.

Für das Ergebnis "kein Fehler kann auftreten" verzweigt das Verfahren von Schritt 222 in den Schritt 224 des Blocks 223. Dort wird das untersuchte System so modifiziert, dass der als fehlerfrei festgestellte Teilbaum nicht mehr getestet wird.

Insbesondere wird das untersuchte System so modifiziert, dass in einer dynamischen Analyse eine Ausführung des als fehlerfrei festgestellten Teilbaums nicht mehr möglich ist. Diese Modifikation kann beispielsweise durchgeführt werden, indem das Stammverzeichnis bzw. die Wurzel im Quellcode des Teils des ausführbaren Computerprogramms, welcher dem als fehlerfrei festgestellten Teilbaum entspricht, gegen eine Ausgangsanweisung (exit statement oder terminating statement) ausgetauscht wird. Alternativ kann eine entsprechende Anweisung an entsprechender Stelle in den Binärcode des Computerprogramms injiziert werden.

In einer weiteren Variante zur Modifikation kann die Pfadbedingung von der Wurzel des gesamten Baums zur Wurzel des Teilbaums berechnet werden und ein Test auf diese Pfadbedingungen als erste Anweisung des zu testenden Computerprogramm hinzugefügt werden. In dieser Alternative können dann beispielsweise Eingangsgrößen, welche die Pfadbedingung nicht erfüllen, nicht ausgeführt werden oder es kann sichergestellt werden, dass in der dynamischen Analyse insbesondere durch einen Fuzzer mit Eingangsgrößen generiert werden, welche die negierte Pfadbedingung erfüllen. Auch somit kann ein (weiterer) dynamischer Test dieses Teilbaums bzw. des entsprechenden Teils des Computerprogramms verhindert werden. Diese Variante kann besonders hilfreich sein, wenn das zu testende System auf einer separaten Hardware läuft, auf der Software nicht einfach oder effizient automatisch ausgetauscht werden kann. Auch weitere Methoden hierfür sind möglich.

Das derart modifizierte System wird dem Block 21 und dort dem Schritt 210 der dynamischen Analyse zugeführt.

Auch wird in Schritt 224 des Blocks 223 der Baum für die statische Analyse so modifiziert, dass der als fehlerfrei festgestellte Teilbaum in der statischen Analyse nicht mehr analysiert wird. Der modifizierte Baum wird hierzu dem Schritt 220 als neue Eingangsgröße zugeführt, welcher wie oben beschrieben einem Start der statischen Analyse entspricht.

Falls es nicht möglich ist, für einen Teilbaum eine Fehlerfreiheit festzustellen, aber eine Bedingung extrahiert werden kann, unter welcher die Ausführung des dem Teilbaum entsprechenden Teils des Computerprogramms zu einem Fehler führt, kann in einer Variante dieses Ergebnis wie das Ergebnis "kein Fehler kann auftreten" behandelt werden. Dabei kann dann statt einer Modifikation der Baumstruktur durch Entfernung des Teilbaums der Teilbaum in der Baumstruktur gegen eine Zusicherungsaussage für die verneinte Bedingung ausgetauscht werden. Dieser Ansatz kann besonders nützlich sein, wenn die eingesetzte Methode zur Feststellung der Fehlerfreiheit für die Berechnung der Bedingung präzise Ergebnisse liefert.

Für das Ergebnis "unbekannt" verzweigt Schritt 222 in den Schritt 226. Dort kann eine Information darüber, dass der entsprechende Teilbaum bereits mit dem Ergebnis "unbekannt" untersucht wurde abgelegt werden. Diese Information kann auch dazu verwendet werden, diesen Teilbaum in der weiteren statischen Analyse nicht (immer) wieder zu untersuchen. Zu einem Ergebnis "unbekannt" kann es beispielsweise kommen, wenn es bei der Berechnung der entsprechenden statischen Analyse zu einer Zeitüberschreitung kommt. In Schritt 227 kann dann gespeichert werden, für welchen Teilbaum das Ergebnis "unbekannt" auftritt, so dass dieser nicht noch einmal berechnet wird.

Für das Ergebnis "ein Fehler kann auftreten" verzweigt Schritt 222 in den Schritt 225. Das Testsystem berechnet in diesem Schritt vorzugsweise einen oder mehrere Eingangsgrößen für das zu testende System, welche eine Ausführung des zu testenden Systems veranlassen, die zur Wurzel des als fehlerbehaftet identifizierten Teilbaums führt. Die Berechnung solcher Eingangsgrößen kann beispielsweise mittels symbolischer Ausführung, konkolischer Ausführung, Modelprüfung, begrenzter Modellprüfung, abstrakte Interpretation, Typisierung, Testfallgenerierung oder Theorembeweisern erfolgen.

Diese mindestens eine erzeugte Eingangsgröße wird in Schritt 225 vorzugsweise der dynamischen Analyse übermittelt, insbesondere dem Block 216 der dynamischen Analyse 21, welcher einem Satz von interessanten, d.h. von in der weiteren dynamischen Analyse zu berücksichtigen Eingangsgrößen entspricht.

Statt des Hinzufügens der mindestens einen erzeugten Eingangsgröße zu dem Satz von zu berücksichtigen Eingangsgrößen wird in einer alternativen Variante eine Pfadbedingung für den Teilbaum berechnet, sowie eine neue Testinstanz der dynamischen Analyse parallel gestartet, insbesondere eine Fuzzinginstanz. In der neuen Testinstanz werden dann nur Eingangsgrößen erzeugt, welche die Pfadbedingung erfüllen. Als Ergebnis konzentriert sich die neue Testinstanz darauf, Fehler in Teilbäumen zu finden, welche von der statischen Analyse als (potentiell) fehlerhaft identifiziert wurden. Beispielsweise kann eine solche neue Fuzzinginstanz aufgenommen werden, wenn der oder die bereits laufenden Fuzzer für eine neue Iteration neugestartet werden. Verschiedene Fuzzing-Instanzen können zusätzlich ihre Sätze an interessanten Eingangsgrößen teilen. Dieser Ansatz ist besonders nützlich, wenn zusätzliche Rechenressourcen verfügbar sind oder wenn Techniken mit überannähernden statistischen Analysen für die statische Analyse verwendet werden, die möglicherweise viele falschpositiven Ergebnisse liefern.

Nach Abschluss des jeweiligen Schritts in Block 223 wird die statische Analyse 22 mit Schritt 220 wieder fortgesetzt. Dabei wird insbesondere für eine Verzweigung aus Schritt 224 (Ergebnis "kein Fehler kann auftreten") ein Neustart der statischen Analyse auf Basis der als Eingangsgröße empfangenen modifizierten Baumstruktur durchgeführt. Anstelle eines Neustarts der statischen Analyse mit einer modifizierten Baumstruktur, kann die statische Analyse in einer alternativen Variante auch mit der ursprünglichen bzw. unveränderten Baumstruktur wiederaufgenommen oder fortgesetzt werden. In diesem Fall werden Informationen über bereits analysierte Teilbäume gespeichert und für die weitere Analyse berücksichtigt, um wiederholte Analysen von gleichen Teilbäumen zu vermeiden. Dieser Ansatz kann besonders dann erfolgen, wenn die Berechnung einer modifizierten Baumstruktur zeit- / rechenaufwendig ist.

In bevorzugten Varianten der beschriebenen statischen Analyse wird diese mit mindestens zwei unterschiedlichen Analysemethoden durchgeführt, wobei eine erste statische Analysemethode die Ausführungsstruktur von der Wurzel Richtung Blätter der Ausführungsstruktur und die zweite statische Analysemethode die Ausführungsstruktur von den Blättern Richtung Wurzel untersucht. Die beiden Analysemethoden werden dabei vorzugsweise gleichzeitig in der statischen Analyse eines Teilbaums der Ausführungsstruktur eingesetzt. Damit kann die Größe des von jeder Analysemethode zu untersuchenden Teils der Struktur reduziert werden, wodurch die statische Analyse schneller und mit höherer Präzision durchgeführt werden kann.

Die dynamische Analyse in Block 21 kann insbesondere mit einem Fuzzer realisiert sein. Fuzz Testing (auch: Fuzzy Testing oder Fuzzing) ist eine bekannte Methode zum dynamischen Testen von Software auf Schwachstellen. Bei diesem Ansatz wird ein getestetes System (SUT - system under test), typischerweise ein Computerprogramm mit Eingangsgrößen ausgeführt, welche es von einem Fuzzer erhält. Während das System ausgeführt wird, also insbesondere die Software ausgeführt wird, d.h. von einem Rechner abgearbeitet wird, beobachtet der Fuzzer das Verhalten des getesteten Systems. Dabei kennzeichnet er zur Verfügung gestellte Eingangsgrößen als fehlerrelevant, wenn das getestete System bei der Ausführung abbricht oder anderes unerwünschtes Verhalten zeigt. Bekannte, verfügbare Fuzzer sind beispielsweise Libfuzz, AFL-fuzz oder Hongfuzz.

Einsetzbare Fuzzing-Varianten umfassen White-Box-Fuzzing, Black-Box-Fuzzing sowie Binärdatei-Fuzzing, wobei für letztere kein Quellcode nötig ist, sondern nur eine kompilierte ausführbare Datei. Auch Hardware-Fuzzing kann eingesetzt werden, wenn das zu testende System ein Hardwaresystem ist, welche die zu testende Funktionalität ausführt.

Der verwendete Fuzzer kann auf derselben Hardware laufen wie das zu testende System. Alternativ kann er auch auf einer anderen Hardware laufen, wobei die Eingangsgrößen und Ausgangsgrößen bzw. Ergebnisse oder Beobachtungen zu dem getesteten System über geeignete Schnittstellen kommuniziert werden.

Block 21 in Fig. 2 zeigt Schritte einer automatisierten dynamischen Analyse eines getesteten Systems. Dabei wird in Schritt 210 ein Fuzzer gestartet.

Der Fuzzer generiert im folgenden Schritt 211 mindestens eine Eingangsgröße für eine Ausführung des getesteten Systems. Die Generierung der Eingangsgrößen beruht vorzugsweise auf Heuristiken und kann auch White-Box-Informationen berücksichtigen, so dass beispielsweise Eingangsgrößen bevorzugt werden, welche zu neuen Ausführungspfaden bei der Systemausführung führen. Die Generierung kann dabei abhängig von einem bereits angelegten und gegebenenfalls in der weiteren Analyse zu erweiternden Satz als interessant oder zu berücksichtigend gespeicherter Eingangsgrößen erfolgen (interesting set). Dabei erfolgt die Generierung neuer Eingangsgrößen abhängig von diesen gespeicherten Eingangsgrößen durch Variationen von Parametern und Werten.

Daraufhin wird mindestens eine Eingangsgröße oder eine Information über diese in Schritt 212 in einem Protokoll über bereits ausgeführte oder initiierte Testfälle abgespeichert und in Schritt 213 als Eingangsgröße für einen Test des getesteten Systems herangezogen, indem das getestete System abhängig von der Eingangsgröße ausgeführt wird. Ist das System ein Computerprogramm oder ein eingebettetes System, welches ein Computerprogramm umfasst, entspricht die Ausführung Berechnungsschritten eines Prozessors abhängig von der Eingangsgröße. Während der Ausführung wird das getestete System bezüglich Systemverhalten und Ausgangsgrößen von dem Testsystem beobachtet. Dabei können bei einem getesteten Computerprogramm beispielsweise Ausführungspfade beobachtet werden, indem während eine Kompilierung des Programms Beobachter bzw. Softwaremonitore hinzugefügt werden.

Im folgenden Schritt 214 wird ein Ergebnis der Beobachtung erzeugt. Mögliche Ergebnisse umfassen insbesondere das Ergebnis "fehlerhafte Ausführung" und "keine fehlerhafte Ausführung". Beispiele für eine fehlerhafte Ausführung eines getesteten Computerprogramms sind Laufzeitausnahmen, verletzte Assertionen, das Einnehmen nicht zulässiger Systemzustände, Systemabbrüche, fehlerhafte Speicherzugriffe (Pufferüberlauf, Zugriff nach Speicherfreigabe), fehlerhafte Ressourcenzugriffe z.B. aufgrund fehlerhafter Synchronisation in mehrsträngigen Programmen oder ein Hängenbleiben des Programms (z.B. livelocks, deadlocks etc.).

Nach Schritt 214 wird für das Ergebnis "fehlerhafte Ausführung" in Schritt 215 verzweigt, in dem die Eingangsgröße oder Informationen über die Eingangsgröße gespeichert werden, welche in einer fehlerhaften Ausführung resultierte. Ziel ist ein Fehlerset oder Protokoll über derartige Eingangsgrößen.

Nach Schritt 214 wird für das Ergebnis "keine fehlerhafte Ausführung" in Schritt 216 verzweigt, in dem die Eingangsgröße oder Informationen über die Eingangsgröße gespeichert werden, welche in keiner fehlerhaften Ausführung resultierte. Ziel ist ein gespeicherter Satz interessanter bzw. für die weitere dynamische Analyse, also durch den Fuzzer zu berücksichtigender Eingangsgrößen (interesting set). Deren Berücksichtigung erfolgt wie zu Schritt 211 beschrieben, dadurch, dass der Fuzzer abhängig von Eingangsgrößen aus diesem Satz wiederum Eingangsgrößen für die weitere Analyse generiert.

Die Schritte 215 und 216 verzweigen wiederum in den Schritt 210, in welchem der Fuzzer wiederum Eingangsgrößen generiert. In alternativen Varianten kann das Verfahren auch nach dem ersten gefundenen Fehlverhalten beendet werden.

Nach der Modifikation des zu testenden Systems in Schritt 224 des Blocks 22 erfolgt vorzugsweise eine Verzweigung auf Schritt 210, es erfolgt also ein Neustart des Fuzzers auf Grundlage des modifizierten zu testenden Systems. Statt eines Neustarts des Fuzzers bei jeder Modifikation (als entsprechend bei jedem als fehlerfrei festgestellten Teilbaums) in Schritt 224, kann das Fuzzing auch erst neu gestartet werden, wenn mehrere Teilbäume analysiert oder als fehlerfrei befunden wurden. Dieser Ansatz ist besonders hilfreich, wenn ein Neustart des Fuzzings einen signifikanten Ausführungsaufwand bedeutet oder wenn Teilbaum-Analysen sehr schnell erfolgen (z.B. am Anfang der Analyse).

In einer bevorzugten Variante laufen dynamische und statische Analyse parallel ab. Sie können aber in einer alternativen Variante auch sequentiell ablaufen, zum Beispiel, indem die dynamische Analyse nach einer bestimmten Zeit angehalten wird, die statische Analyse durchgeführt wird und dann abhängig von deren Ergebnis (also insbesondere mit gegebenenfalls modifiziertem zu testenden System) wieder die dynamische Analyse fortgesetzt wird. Das kann besonders nützlich sein, wenn keine (ausreichenden) parallelen Rechenkapazitäten vorliegen. Das Anhalten und Starten der dynamischen bzw. statischen Analyse kann dabei jeweils von Heuristiken abhängen, beispielsweise von der verstrichenen Zeit oder von einem Analysefortschritt.

Der gesamte computerimplementierte und automatisierte Test des Systems mit statischer und dynamischer Analyse kann zuverlässig und besonders zeit- und ressourceneffizient Ausführungsfehler erkennen und identifizieren.

Die gespeicherten Ergebnisse des Tests (insbesondere der Satz an Eingangsgrößen, die zu fehlerhaftem Verhalten führen, der Satz bereits für die dynamische Analyse eingesetzter Eingangsgrößen, der Satz weiterhin von der dynamischen Analyse zu berücksichtigender Eingangsgrößen (interesting set) oder Informationen über die in der statischen Analyse als fehlerfrei identifizierter Teilbäume) kann genutzt werden, das System zu verbessern. Abhängig von den gespeicherten Ergebnissen kann beispielsweise ein Debugging von Fehlern oder eine Analyse möglicher Konsequenzen, beispielsweise für Sicherheitsanforderungen, oder eine Produkt- oder Sicherheitsfreigabe für das System erfolgen.

## Patentansprüche

1. Computerimplementiertes Verfahren zum Testen eines Systems, wobei das getestete System insbesondere ein Computerprogramm, ein Hardwaresystem oder ein eingebettetes System ist, **gekennzeichnet durch** die Schritte:
- mit einer statischen Analyse (22) wird ein erster Teil einer Ausführungsstruktur für das System daraufhin untersucht (222), ob das System bei einer Ausführung von dem ersten Teil der Ausführungsstruktur entsprechenden Ausführungspfaden ohne Fehler abläuft, wobei die Fehler mindestens eine Laufzeitausnahme, eine verletzte Assertion, ein Einnehmen eines nicht zulässigen Systemzustands, einen Systemabbruch, einen fehlerhaften Speicherzugriff oder einen fehlerhaften Ressourcenzugriff oder ein Hängenbleiben insbesondere ein nicht Weiterrechnen eines Computerprogramms umfassen,
- wird für den ersten Teil der Ausführungsstruktur in der statischen Analyse (22) eine Ausführung ohne Fehler festgestellt (224), erfolgt eine Untersuchung des Systems mit einer dynamischen Analyse (21), welche dem ersten Teil der Ausführungsstruktur entsprechende Ausführungspfade ausspart.

2. Verfahren nach einem der vorangegangenen Ansprüche, **dadurch gekennzeichnet, dass** in einer weiteren statischen Analyse (22) der erste Teil der Ausführungsstruktur ausgespart wird, wenn für den ersten Teil der Ausführungsstruktur in der statischen Analyse (22) eine Ausführung ohne Fehler festgestellt wird (224).

3. Verfahren nach einem der vorangegangenen Ansprüche, **dadurch gekennzeichnet, dass** für den ersten Teil der Ausführungsstruktur abhängig von der statischen Analyse (22) eine erste Eingangsgröße berechnet wird und die erste Eingangsgröße in einem Satz für eine dynamische Analyse (21) zu berücksichtigender Eingangsgrößen gespeichert wird, wenn für den ersten Teil der Ausführungsstruktur in der statischen Analyse (22) eine Ausführung mit Fehler festgestellt wird (225).

4. Verfahren nach Anspruch 3, **dadurch gekennzeichnet, dass** als die erste Eingangsgröße eine Eingangsgröße berechnet wird, für die die statische Analyse (22) ergibt, dass die Ausführung mit Fehler auftritt.

5. Verfahren nach einem der vorangegangenen Ansprüche, **dadurch gekennzeichnet, dass** das getestete System ein Computerprogramm umfasst, dass die Ausführungsstruktur eine Baumstruktur ist, welche Ausführungspfade des Computerprogramms darstellt, und dass die dynamische Analyse (21) eine Ausführung eines Programmcodes des Computerprogramms auf einem Rechner umfasst.

6. Verfahren nach einem der vorangegangenen Ansprüche, **dadurch gekennzeichnet, dass** die statische Analyse (22) und die dynamische Analyse (21) parallel ausgeführt werden.

7. Verfahren nach einem der Ansprüche 1 bis 5, **dadurch gekennzeichnet, dass** die statische Analyse (22) und die dynamische Analyse (21) sequentiell ausgeführt werden.

8. Verfahren nach einem der vorangegangenen Ansprüche, **dadurch gekennzeichnet, dass** das System mit der dynamischen Analyse (21) daraufhin untersucht wird, ob das System für mindestens eine bestimmte Eingangsgröße fehlerfrei ausgeführt wird.

9. Verfahren nach Anspruch 8, **dadurch gekennzeichnet, dass** das System mit der dynamischen Analyse (21) daraufhin untersucht wird, ob bei dessen Ausführung eine Laufzeitausnahme, eine verletzte Assertion, ein Einnehmen eines nicht zulässigen Systemzustands, ein Systemabbruch, ein fehlerhafter Speicherzugriff, ein fehlerhafter Ressourcenzugriff oder ein Hängenbleiben auftritt.

10. Verfahren nach einem der Ansprüche 8 oder 9, **dadurch gekennzeichnet, dass** das System abhängig von der dynamischen Analyse (21) verbessert wird, insbesondere, dass ein festgestellter Fehler behoben wird.

11. Verfahren nach einem der vorangegangenen Ansprüche, **dadurch gekennzeichnet, dass** mit der statischen Analyse (22) untersucht wird, ob bei einer Ausführung von dem ersten Teil der Ausführungsstruktur entsprechenden Ausführungspfaden des Systems eine Laufzeitausnahme, eine verletzte Assertion, ein Einnehmen eines nicht zulässigen Systemzustands, ein Systemabbruch, ein fehlerhafter Speicherzugriff, ein fehlerhafter Ressourcenzugriff oder ein Hängenbleiben auftritt.

12. Verfahren nach einem der vorangegangenen Ansprüche, **dadurch gekennzeichnet, dass** die dynamische Analyse (21) ein Fuzzing umfasst, insbesondere, dass die dynamische Analyse (21) für mindestens eine von einem Fuzzer erzeugte Eingangsgröße erfolgt.

13. Verfahren nach einem der vorangegangenen Ansprüche, **dadurch gekennzeichnet, dass** die statische Analyse (22) eine Modellprüfung, eine begrenzte Modellprüfung, eine Untersuchung mittels Theorembeweiser, eine Typisierung, eine abstrakte Interpretation, eine symbolische Ausführung oder eine konkolische Ausführung umfasst.

14. Verfahren nach einem der vorangegangenen Ansprüche, **dadurch gekennzeichnet, dass** die statische Analyse (22) eine computerimplementierte Untersuchung des Systems anhand einer Ausführungsstruktur ohne tatsächliche Ausführung des Systems umfasst, insbesondere mittels einer formalen mathematischen Methode.

15. Verfahren nach einem der vorangegangenen Ansprüche, **dadurch gekennzeichnet, dass** die Untersuchung des ersten Teils der Ausführungsstruktur für das System in der statische Analyse (22) mit zwei unterschiedlichen Analysemethoden durchgeführt wird, wobei die erste Analysemethode den ersten Teil der Ausführungsstruktur von einer Wurzel der Ausführungsstruktur Richtung einem Blatt der Ausführungsstruktur und die zweite Analysemethode den ersten Teil der Ausführungsstruktur von dem Blatt der Ausführungsstruktur Richtung der Wurzel der Ausführungsstruktur untersucht.

16. Verfahren nach einem der vorangegangenen Ansprüche, **dadurch gekennzeichnet, dass** die dynamische Analyse (21) eine computerimplementierte Untersuchung des Systems während einer tatsächlichen Ausführung des Systems umfasst.

17. Computerprogramm, welches dazu eingerichtet ist, ein Verfahren nach einem der vorangegangenen Ansprüche auszuführen.

18. Maschinenlesbarer Speicher, auf dem ein Computerprogramm nach Anspruch 16 gespeichert ist.

19. Testsystem zum Testen eines Systems, mit einem Speicher nach Anspruch 17, einem Prozessor zum Ausführen des Computerprogramms nach Anspruch 16 und mindestens einer Schnittstelle zu dem getesteten System.

## Claims

1. Computer-implemented method for testing a system, wherein the tested system is in particular a computer program, a hardware system or an embedded system, **characterized by** the following steps:
- a static analysis (22) is used to examine (222) a first part of an execution structure for the system in order to determine whether the system runs without errors when executing execution paths corresponding to the first part of the execution structure, with the errors comprising at least a runtime exception, a violated assertion, adoption of an inadmissible system state, a system abort, incorrect memory access or incorrect resource access or sticking, in particular a lack of further computing of a computer program,
- if execution without errors is determined (224) for the first part of the execution structure in the static analysis (22), the system is examined with a dynamic analysis (21) which omits execution paths corresponding to the first part of the execution structure.

2. Method according to one of the preceding claims, **characterized in that**, in a further static analysis (22), the first part of the execution structure is omitted if execution without error is determined (224) for the first part of the execution structure in the static analysis (22).

3. Method according to one of the preceding claims, **characterized in that** a first input variable is calculated for the first part of the embodiment structure on the basis of the static analysis (22) and the first input variable is stored in a set of input variables to be taken into account for a dynamic analysis (21) if execution with an error is determined (225) for the first part of the execution structure in the static analysis (22).

4. Method according to Claim 3, **characterized in that** an input variable, for which the static analysis (22) reveals that the execution occurs with an error, is calculated as the first input variable.

5. Method according to one of the preceding claims, **characterized in that** the tested system comprises a computer program, **in that** the execution structure is a tree structure representing execution paths of the computer program, and **in that** the dynamic analysis (21) comprises execution of a program code of the computer program on a computer.

6. Method according to one of the preceding claims, **characterized in that** the static analysis (22) and the dynamic analysis (21) are carried out in parallel.

7. Method according to one of Claims 1 to 5, **characterized in that** the static analysis (22) and the dynamic analysis (21) are carried out sequentially.

8. Method according to one of the preceding claims, **characterized in that** the system is examined with the dynamic analysis (21) in order to determine whether the system is executed without errors for at least a certain input variable.

9. Method according to Claim 8, **characterized in that** the system is examined with the dynamic analysis (21) in order to determine whether a runtime exception, a violated assertion, adoption of an inadmissible system state, a system abort, incorrect memory access, incorrect resource access or sticking occurs during its execution.

10. Method according to either of Claims 8 and 9, **characterized in that** the system is improved on the basis of the dynamic analysis (21), in particular a detected error is corrected.

11. Method according to one of the preceding claims, **characterized in that** the static analysis (22) is used to examine whether a runtime exception, a violated assertion, adoption of an inadmissible system state, a system abort, incorrect memory access, incorrect resource access or sticking occurs when executing execution paths of the system that correspond to the first part of the execution structure.

12. Method according to one of the preceding claims, **characterized in that** the dynamic analysis (21) comprises fuzzing, in particular **in that** the dynamic analysis (21) is carried out for at least one input variable generated by a fuzzer.

13. Method according to one of the preceding claims, **characterized in that** the static analysis (22) comprises a model test, a limited model test, an examination by means of a theorem prover, typing, an abstract interpretation, symbolic execution or concolic execution.

14. Method according to one of the preceding claims, **characterized in that** the static analysis (22) comprises a computer-implemented examination of the system using an execution structure without actual execution of the system, in particular by means of a formal mathematical method.

15. Method according to one of the preceding claims, **characterized in that** the first part of the execution structure for the system is examined in the static analysis (22) with two different analysis methods, wherein the first analysis method examines the first part of the execution structure from a root of the execution structure in the direction of a leaf of the execution structure and the second analysis method examines the first part of the execution structure from the leaf of the execution structure in the direction of the root of the execution structure.

16. Method according to one of the preceding claims, **characterized in that** the dynamic analysis (21) comprises a computer-implemented examination of the system during actual execution of the system.

17. Computer program which is configured to carry out a method according to one of the preceding claims.

18. Machine-readable memory in which a computer program according to Claim 17 is stored.

19. Test system for testing a system, having a memory according to Claim 18, a processor for executing the computer program according to Claim 17 and at least one interface to the tested system.

## Revendications

1. Procédé mis en œuvre par ordinateur pour tester un système, le système testé étant notamment un programme informatique, un système matériel ou un système intégré, **caractérisé par** les étapes suivantes :
- une première partie d'une structure d'exécution pour le système est examinée (222) par une analyse statique (22) afin de déterminer si le système, lors d'une exécution de chemins d'exécution correspondant à la première partie de la structure d'exécution, se déroule sans erreur, les erreurs comprenant au moins une exception de temps d'exécution, une assertion violée, une adoption d'un état non autorisé du système, une interruption du système, un accès incorrect à la mémoire ou un accès incorrect aux ressources ou un blocage, notamment une non-continuation d'un programme informatique,
- si une exécution sans erreur est constatée (224) pour la première partie de la structure d'exécution dans l'analyse statique (22), une analyse du système est effectuée par une analyse dynamique (21), laquelle exclut les chemins d'exécution correspondant à la première partie de la structure d'exécution.

2. Procédé selon l'une des revendications précédentes, **caractérisé en ce que**, dans une analyse statique (22) supplémentaire, la première partie de la structure d'exécution est exclue lorsqu'une exécution sans erreur est constatée (224) dans l'analyse statique (22) pour la première partie de la structure d'exécution.

3. Procédé selon l'une des revendications précédentes, **caractérisé en ce que**, pour la première partie de la structure d'exécution, une première grandeur d'entrée est calculée en fonction de l'analyse statique (22) et la première grandeur d'entrée est stockée dans un ensemble de grandeurs d'entrée à prendre en compte pour une analyse dynamique (21) lorsqu'une exécution avec des erreurs est constatée (225) dans l'analyse statique (22) pour la première partie de la structure d'exécution.

4. Procédé selon la revendication 3, **caractérisé en ce que** la première grandeur d'entrée calculée est une grandeur d'entrée pour laquelle l'analyse statique (22) indique que l'exécution se produit avec des erreurs.

5. Procédé selon l'une des revendications précédentes, **caractérisé en ce que** le système testé comprend un programme informatique, **en ce que** la structure d'exécution est une structure arborescente qui représente des chemins d'exécution du programme informatique et **en ce que** l'analyse dynamique (21) comprend une exécution d'un code de programme du programme informatique sur un ordinateur.

6. Procédé selon l'une des revendications précédentes, **caractérisé en ce que** l'analyse statique (22) et l'analyse dynamique (21) sont exécutées en parallèle.

7. Procédé selon l'une des revendications 1 à 5, **caractérisé en ce que** l'analyse statique (22) et l'analyse dynamique (21) sont exécutées séquentiellement.

8. Procédé selon l'une des revendications précédentes, **caractérisé en ce que** le système est examiné par l'analyse dynamique (21) afin de déterminer si le système est exécuté sans erreur pour au moins une grandeur d'entrée déterminée.

9. Procédé selon la revendication 8, **caractérisée en ce que** le système est examiné par l'analyse dynamique (21) afin de déterminer si, lors de son exécution, il se produit une exception de temps d'exécution, une assertion violée, une adoption d'un état non autorisé du système, une interruption du système, un accès incorrect à la mémoire, un accès incorrect aux ressources ou un blocage.

10. Procédé selon l'une des revendications 8 ou 9, **caractérisé en ce que** le système est amélioré en fonction de l'analyse dynamique (21), notamment **en ce qu'**une erreur constatée est corrigée.

11. Procédé selon l'une des revendications précédentes, **caractérisé en ce que** par l'analyse statique (22) il est examiné si, lors d'une exécution de la première partie des chemins d'exécution du système, correspondant à la structure d'exécution, il se produit une exception de temps d'exécution, une assertion violée, une adoption d'un état non autorisé du système, une interruption du système, un accès incorrect à la mémoire, un accès incorrect aux ressources ou un blocage.

12. Procédé selon l'une des revendications précédentes, **caractérisé en ce que** l'analyse dynamique (21) comporte un test à données aléatoires, notamment **en ce que** l'analyse dynamique (21) s'effectue pour au moins une grandeur d'entrée produite par un générateur de données aléatoires.

13. Procédé selon l'une des revendications précédentes, **caractérisé en ce que** l'analyse statique (22) comprend une vérification de modèle, une vérification de modèle limitée, un examen au moyen d'un démonstrateur de théorème, un typage, une interprétation abstraite, une exécution symbolique ou une exécution concolique.

14. Procédé selon l'une des revendications précédentes, **caractérisé en ce que** l'analyse statique (22) comprend un examen mis en œuvre par ordinateur du système au moyen d'une structure d'exécution sans exécution réelle du système, notamment au moyen d'une méthode mathématique formelle.

15. Procédé selon l'une des revendications précédentes, **caractérisé en ce que** l'examen de la première partie de la structure d'exécution du système est effectué dans l'analyse statique (22) par deux méthodes d'analyse différentes, la première méthode d'analyse examinant la première partie de la structure d'exécution depuis une racine de la structure d'exécution en direction d'une feuille de la structure d'exécution et la deuxième méthode d'analyse la première partie de la structure d'exécution depuis la feuille de la structure d'exécution direction en direction de la racine de la structure d'exécution.

16. Procédé selon l'une des revendications précédentes, **caractérisé en ce que** l'analyse dynamique (21) comprend un examen mis en œuvre par ordinateur du système pendant une exécution réelle du système.

17. Programme informatique, lequel est conçu pour mettre en œuvre un procédé selon l'une des revendications précédentes.

18. Mémoire lisible par machine, sur laquelle est enregistré un programme informatique selon la revendication 17.

19. Système de test destiné à tester un système comprenant une mémoire selon la revendication 18, un processeur destiné à exécuter le programme informatique selon la revendication 17 et au moins une interface avec le système testé.
